# EUROPEAN PATENT SPECIFICATION

(11) **EP 1 238 143 B1**
(45) Date of publication and mention of the grant of the patent: **07.06.2006**
(21) Application number: 00971946.9
(22) Date of filing: 12.10.2000
(51) Int. Cl.: D21F 1/00, D21F 1/66

(54) **ARRANGEMENT AND METHOD FOR RECOVERY OF ENERGY IN A PAPER MACHINE**
VERFAHREN UND VORRICHTUNG ZUR WIEDERGEWINNUNG VON ENERGIE IN EINER PAPIERMASCHINE
ARRANGEMENT ET PROCEDE DE RECUPERATION D'ENERGIE SUR UNE MACHINE A PAPIER

(30) Priority: 16.12.1999 SE 9904602
(43) Date of publication of application: 11.09.2002
(73) Proprietor: Metso Paper Karlstad Aktiebolag, 651 15 Karlstad (SE)
(72) Inventor: ERIKSSON, Sören, Charlotte, NC 28277 (US)
(74) Representative: Johansson, Lars-Erik
(86) International application number: PCT/SE2000/001971
(87) International publication number: WO 2001/044564

(56) References cited:
- SE-B- 384 547
- SE-B- 387 143

## Description

### TECHNICAL FIELD

This invention relates to a method of recovering energy in a forming section of a papermaking or boardmaking machine, wherein stock from a headbox is fed into a forming zone of a forming section, said forming zone including at least one looped forming fabric curving along a convex surface of a support member, and water is drained from the stock through said at least one forming fabric in the forming zone to form a paper or board web, the water passing through said at least one fabric being thrown out from the forming zone and possessing kinetic energy. Moreover, the invention relates to an arrangement in a papermaking or boardmaking machine.

### STATE OF THE ART

Paper and board is today produced at very high speeds, and especially tissue paper, newsprint, and magazine paper. For tissue the machine speed has today reached 2000 m/min. When forming the fibre web, e.g. in a double wire former (see e.g. US 4 028 174 or GB 1 347 289), stock is injected by the headbox inbetween two forming clothings, which both run a wire support, e.g. such as a forming roll. The outer clothing is a wire, which is permeable to water. The other clothing (e.g. a felt or a wire) is intended to carry the web for further processing. The stock has a fibre concentration of between 0.1 to 0.5 % and the flow is about 0.5 m³/sec and cross sectional meter. The forming of the web occurs by means of the water within the stock being drained through the outer flexible fabric, i.e. the wire, such that only a minor portion of the water is carried on by the fibre web. The water is squeezed out by the static pressure which is applied by means of the wire which is pretensioned by means of lead rolls against the forming roll. Due to the above mentioned force the water that leaves through the wire will theoretically normally have a larger speed than the peripheral speed of the forming roll. Since enormous amounts of water are drained, e.g. in a normal large tissue machine (6 meters wide), the flow of drainage water is about 3 m³/sec, it is realized that large amounts of energy are released at this point of a paper machine. Hitherto, none of this energy has been recovered, at least not the kinetic part thereof, but has merely been collected in a white water tray for recirculation. The same problem is relevant also in connection with single wire formers using a single wire and a forming roll or in a blade former type of a forming section, wherein a forming roll is not required.

### BRIEF DESCRIPTION OF THE INVENTION

It is an object of the invention to minimize the above mentioned disadvantages by providing a method and an apparatus for recovery of a substantial part of the kinetic energy of the drained white water in a paper machine. This is achieved by a method of recovering energy in a forming section of a papermaking or boardmaking machine, wherein stock from a headbox is fed into a forming zone of a forming section, said forming zone including at least one looped forming fabric curving along a convex surface of a support member, and water is drained from the stock through said at least one forming fabric in the forming zone to form a paper or board web, the water passing through said at least one fabric being thrown out from the forming zone and possessing kinetic energy, characterized by placing a movable component in the water thrown out from the forming zone, so as to cause the water to move the component, and thereby recovering part of the kinetic energy, by connecting said recovered energy to drive another device or unit, e.g. an electric generator.

By the invention surprisingly large amounts of energy may be recovered from the kinetic energy of the water which is taken out from the stock during the dewatering process in connection with the forming of the web. Calculations show that for a tissue twin wire machine having a 6 m wide headbox and a machine speed of 1800 m/min up to 800 kW can be recovered, which implies a saving of about 2 million SEK/year. Since the investment cost is relatively moderate, the pay-offtime can be made very short depending on the price of electricity.

Further preferred aspects of the invention are defined by:
- providing a turbine preferably a reaction turbine, for use as the movable component, and mounting the turbine so as to be rotated by the water that has passed through said at least one forming fabric;
- providing two looped forming fabrics in a twin wire former arrangement, said two looped forming fabrics curving along the convex surface of the support member and defining a converging forming zone, draining water from the stock through at least an outer one of the two fabrics in the forming zone in relation to the convex surface of the support member to form a paper or board web (W) and mounting the movable component inside the loop of said outer one of the forming fabrics;
- supporting the two forming fabrics on a rotatable forming roll, said roll being included in the support member;
- supporting the two forming fabrics on a forming shoe having a convex support surface for supporting the fabrics, said shoe being included in the support member;
- supporting the two forming fabrics on a curved series of dewatering blades spaced from one another in the machine direction, said blades being included in the support member and the convex support surface thereof;
- at least one guide plate guiding the moving water into the turbine;
- the water moving along a curved path along the major part of said guide plate;
- the radius (R2) of a major part of said curved path being substantially constant and larger than the radius (R1) of the forming roll, but smaller than 120 % of R1, i.e. R1<R2<R1 x 1,2;
- the angular extension (γ) of the guide plate covering between 20 to 90° of the circumference of the forming roll;
- the forming roll being a vacuum roll with perforations in its surface and that the angular extension of the guide plate is between 20 to 50°, preferably 25 to 40°;
- the forming roll having an impermeable surface and that the angular extension γ of guide plate is between 40 and 80°, preferably 50 to 70°;
- the speed of the web (w) being more than 1000 m/min, preferably more than 1500 m/min more preferred more than 1800 m/min;
- at least 0,2 m³/sec/m being squeezed out through the said wire, preferably at least 0,3 m³/sec and more preferred at least 0,4 m³; and
- using an electric generator to transform said kinetic energy to electric energy, preferably by supplying said electric energy to a pump, and more preferred to a stock pump.

The invention also relates to an arrangement in papermaking or board machine, for performing the method according to claim 1, comprising a headbox for supplying a stock, a forming section, including at least one looped forming fabric and a support member with a convex surface, said fabric is arranged to run a part of said convex surface of said support member and so to define a forming zone, wherein a paper or board web is formed, the stock is supplied by said headbox into said forming zone and water is drained from the stock through said at least one forming fabric in the forming zone to form the paper or board web, the water passing through said at least one fabric being thrown out from the forming zone and possessing kinetic energy, characterised in that a movable component is positioned adjacent said forming zone to recover at least some of the kinetic energy of the water that is drained from the stock, whereby said movable component is converting the recovered kinetic energy into driving of another device/unit.

According to further aspects of the invention:
- the turbine is of the reaction type, preferably a Banki turbine;
- a guiding arrangement for guiding the moving water that is squeezed out through the wire into the turbine;
- said guiding arrangement comprises a guide plate which is positioned in close relationship to the periphery of the forming roll;
- a major part of said guide plate has a radius R2 which is substantially constant and equal to or larger than the radius R1 of the forming roll, wherein preferably R1<R2<R1 x 1,2
- said guide plate has an upstream end and a downstream end and the angular extension γ between said end points 16A, 16B is between 20 to 90°, preferably 30 to 70°;
- the angular extension α of the flexible fabric is larger than the angular extension β of the wire and the angular extension γ of the guide plate is less than the angular extension of the wire;
- said guide arrangement comprises a second guide plate downstream of said guide plate, which second guide plate has a cross sectional length which is substantially shorter than the cross sectional length of the guide plate;
- said second guide plate is curved and its curvature is opposite to the curvature of the guide plate;
- the axial extension of the turbine is substantially the same as the axial extension of the wire, which preferably has an axial extension which is substantially the same as the axial extension of the forming roll;
- the outer diameter of the turbine φT is substantially smaller than the radius R1 of the forming roll, wherein preferably R1x0,5<φT<R1x0,9;
- the turbine is positioned with its axis in parallel with the axis of the forming roll and the turbine and the forming roll are positioned in relationship such that the smallest distance between the periphery of the turbine and the periphery of the forming roll is between 5-700 mm, preferably 20-200 mm;
- the shaft of the turbine is connected to an electric generator, preferably a three phase synchronous motor;

### BRIEF DESCRIPTION OF THE DRAWINGS

In the following the invention would be described in more detail with reference to the attached drawings, in which:
- Fig. 1: shows a schematic side view of an arrangement according to the invention;
- Fig. 2: shows a side view of essential parts of a preferred embodiment according to the invention;
- Fig.3: shows a modification of the embodiment shown in Fig. 2;
- Fig. 4: shows a second modification of the embodiment shown in Fig. 2;
- Fig. 5: shows a third modification of the embodiment shown in Fig. 2;
- Fig. 6: shows a perspective view of essential parts of the invention;
- Fig. 7: shows the invention in connection with a so called "C-former";
- Fig. 8: shows the principle of the invention in connection with a so called "S-former";
- Fig. 9: shows the principles of the invention in connection with a C-former having a vacuum roll;
- Fig. 10: shows the principles of the invention in connection with a so called speed former;
- Fig. 11: shows the principles of the invention in connection with a speed former in a horizontal position;
- Fig. 12: shows in principle the same as Fig. 10, but with a vacuum roll as the forming roll;
- Fig. 13: shows in principle the same as Fig. 11, but with a vacuum roll as the forming roll; and
- Fig. 14: shows an alternate embodiment of using the invention with a speed former.

### DETAILED DESCRIPTION OF THE INVENTION

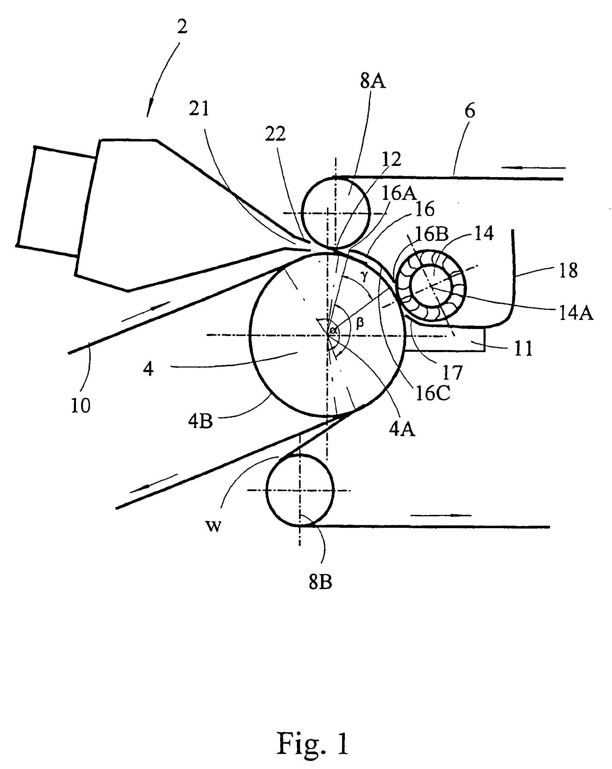

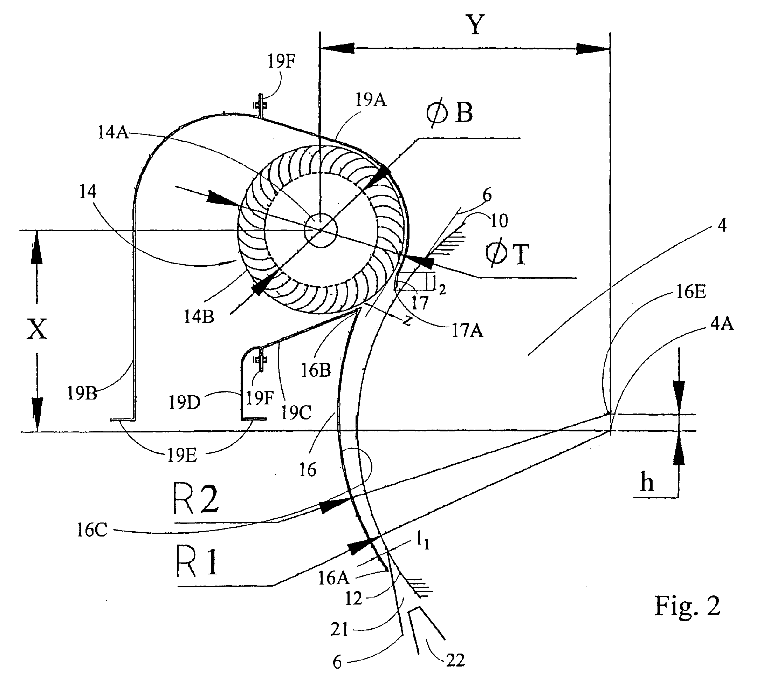

The invention may be used together with all kinds of double wire formers, i.e. wherein two clothings (two wires or one wire and a felt e.g. depending on the need of drainage capacity) run on top of each other around a forming unit, e.g. a forming roll. In Fig. 1 there is shown a so called crescent former comprising a headbox 2, a forming roll 4, a wire 6 and a felt 10. The forming roll 4 has an outer surface 4B which is impermeable, i.e. a so called solid surface. The forming roll 4 rotates about an axis 4A. The felt 10 runs around the forming roll, in contact with its outer surface 4B, with an angular extension of contact α which is slightly more than 180°. The wire 6 runs around the forming roll 4 on top of the felt 10 with an angular extension of contact β which is less than 180°. The wire 6 is pressed against the felt on top of the surface 4B of the forming roll 4 by means of an upper guiding roll 8A and a lower guiding roll 8B. The headbox 2 injects stock 21 through its discharge opening 22 into a nip 12, which is formed where the wire 6 meets the felt 10. According to the invention there is positioned a turbine 14 in close proximity to the periphery of the forming roll 4. A guide plate 16 having a radius R2 which is slightly larger than the radius R1 of the forming roll 4 (see Fig. 2) is positioned at a distance above the forming roll 4 between the nip 12 and the turbine 14. The angular extension γ of the guide plate 16 is about 35°, and its upstream edge 16A is positioned close to the nip 12, whereas its downstream end 16B is positioned close to the turbine 14. Downstream of the turbine 14 close to the periphery of the forming roll 4 there is positioned a second guide plate 17, behind and below the turbine 14. The axis 14A of the turbine is connected to an electric generator 11 (schematically shown), preferably by means of a transmission (not shown). The turbine 14 is of a reaction type, preferably a so called Banki turbine, which is also called a cross-flow turbine due to its function. This kind of turbine is especially suitable in connection with an arrangement according to the invention, since it is very well suited for recovering energy from water moving with relatively high speed, as will be the case according to the invention. The guide plate 16 has a constant curvature R2, which is slightly larger than the radius R1 of the forming roll 4, preferably 1.05 x the radius R1 of the forming roll 4. The guide plate 16 is positioned such that its concave surface 16C, which forms the path along which the water is guided is positioned about 20 to 50 mm above the surface of the wire 6. There is a white water tray 18.

The function of an arrangement according to the invention is as follows. Once the felt 10 and the wire 6, of the forming section, are running at the desired speed, e.g. 1500 m/min, stock 21 is injected by means of discharge opening 22 of the headbox 2. The stock is supplied into the nip 12 and thereafter it follows between the two clothings 6, 10 around the forming roll 4. In connection herewith, a major amount of the water contained in the stock 21 will be squeezed out through the wire 6 by wire tension. As a result the water, which is squeezed out, will have a slightly higher speed than the peripheral speed of the forming roll 4. Tests show that if the peripheral speed is 30 m/sec, the speed of the water droplets will be about 30.4 m/sec. For a roll with an impermeable surface as used in Fig. 1, the dewatering will occur along about 60° of an angular zone starting at the nip 12. The dewatering flow is largest during the first 10°, then it slightly decreases. The droplets will be collected on a curved surface 16C of the guide plate 16, which is formed to create as little turbulence as possible, which is achieved by having the surface 16C with as little irregularities as possible and by using a constant curvature. The water will collect along the guide plate 16 and finally be guided into the turbine 14 with an optimal direction of flow to recover as much of the kinetic energy as possible. For a cross-flow turbine (e.g. Banki turbine) 14, about 80 % of the energy is recovered during the flow into the turbine and about 20 % during the flow out of the turbine. This cross-flow function is the reason why a Banki turbine is specially suitable. Downstream of the turbine 14 there is a second guide plate 17, which has a reversed curvature in relation to the first guide plate 16 to guide a further amount of water into the turbine 14. The rotation of the turbine 14, which is caused by the water, will be transferred by its axis 14A to a transmission (not shown) and thereafter into an electric generator for producing electric energy. A transmission is favourable in most applications to transform the rotational speed of the turbine 14 to a rotational speed which is optimal for the generator 11. It is evident that different kinds of generators may be used, e.g. alterntor or continuous current generator, depending on the circumstances.

In the preferred embodiment the electrical power which is produced by the generator 11 is supplied to the stock pumps (not shown), which feed the headbox 2.

Thanks to the invention, large amount of energy may be recovered. With an optimised arrangement the total yield may be about 60 %. If the stock flow is about 0.5 m³/sec and cross sectional meter, the power that can be recovered for a six meter wide machine is about 810 kW. At a price of 0.30 SEK/kW, this will lead to an annual saving of about 2 MSEK with 350 days of operation per year. Considering further aspects of the invention, e.g. environmental friendly, it is realised that the achievements of the invention are surprisingly positive.

Fig. 2 shows a more detailed view of an embodiment according to the invention. The basic principles thereof are exactly the same as in relation to Fig. 1, except the positioning of the arrangement and the use of a second wire instead of the felt 10. In Fig. 2 the headbox 2 is positioned below the centre 4A of the forming roll 4 and the injection discharge opening 22 is directed upwardly. The radius R1 of the forming roll is 760 mm. The radius R2 of the guide plate 16 is constant and about 810 mm. The centre of the constant curvature of the guide plate 16 is offset in relation to the centre 4A of the forming roll, i.e. 50 mm above the centre 4A of the forming roll 4. The shortest distance l₁ between the guide plate and the periphery of the forming roll (wire 6) is about 35 mm. Due to the offset location of the centre 16E of curvature of the guide plate 16 the distance increases constantly upwardly. The distance between the turbine 14 and the periphery 4B of the forming roll 4 is about 50 mm. (Normally the distance should be between 10 and 100 mm, preferably between 20 and 70 mm.)

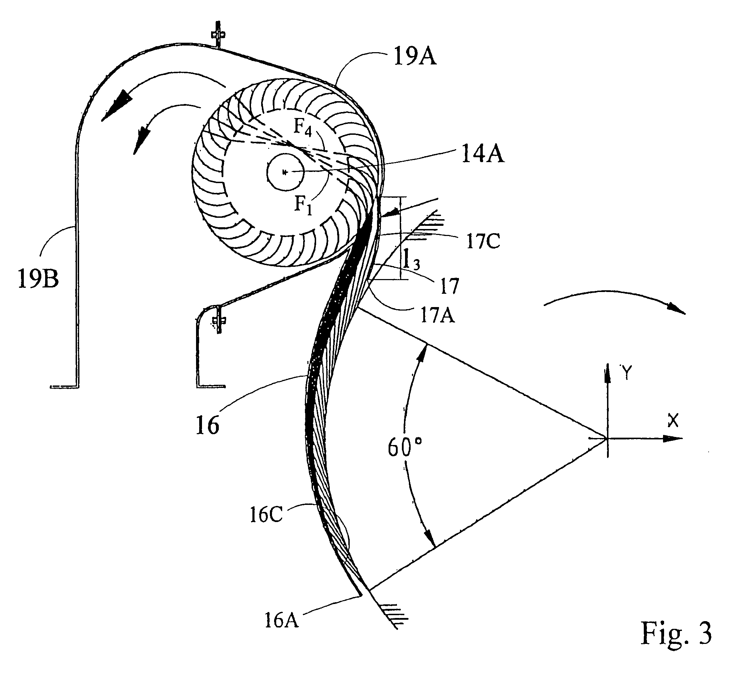

The second guide plate 17, which is substantially flat, is positioned with its edge 17A close to the periphery 4B of the forming roll 4, e.g. about 10 mm between the edge 17A and the wire 6. The cross sectional length l₂ of the second guide plate 17 is about 50 mm. (The width of the guide plates, however, would normally be the same, i.e. same as the turbine.) Accordingly the first guide plate 16 directs the major part of the moving water into the turbine 14 with a first direction adapted to the angle of the turbine blades at the position of the downstream end 16B of the guide plate at that position. The direction of the extension of the second guide plate 17 is adapted to the optimal angle of the turbine blades at that position. Around the turbine 14 there is a housing 19. The housing comprises several parts; a innermost upper part 19A, an outermost lower part 19B, a lowermost inner part 19C, and a lowermost base part 19D. The different parts are attached to each other by means of flanges 19F. At the bottom of the housing 19, there are flanges 19E for attachment of the housing to the white water tray 18 of the paper machine. The uppermost part of the housing 19A (positioned downstream of the guide plate 16) is fitted to enclose, at a short distance, a large part of the periphery 14B of turbine in order to guide the water in a correct manner, to be more explained in relation to Fig. 3. The diameter φT is 500 mm. The inner diameter of the turbine φI is 340 mm.

Fig. 3 shows an embodiment which is similar to Fig. 2, with the exception that the turbine 14 is positioned further away from the forming roll 4. As a consequence, the last part of the inner surface 16C of the guide plate is made flat. It is important that the transition from the constant curvature to this straight part is made in a smooth way without formation of any turbulence creating features. Also, the second guide pate 17 is different. In order to guide the water, it is made substantially longer, such that its extension l₃ is about ¼ of the radius R1 of the forming roll, i.e. about 200 mm. The second guide plate is curved in an opposite manner in comparison with the first guide plate 16.

The lines F₁ to F₄ show different flow patterns of the water entering into the turbine. The major part of the water will pass through the turbine 14 along the flow line F₁. Accordingly, the water is first redirected and leaving energy to the turbine wheel 14 at the entrance, which gives the flow line F₁ through the inner of the turbine and finally the moving water hits the turbine crosswise, i.e. from the inside moving out and leaving its last kinetic energy thereto. The water entering into the turbine by means of the second guide plate 17 will move through the turbine along a flow pattern according to F₄. This cross-flow pattern of the Banki turbine is especially suitable for use in connection with the invention.

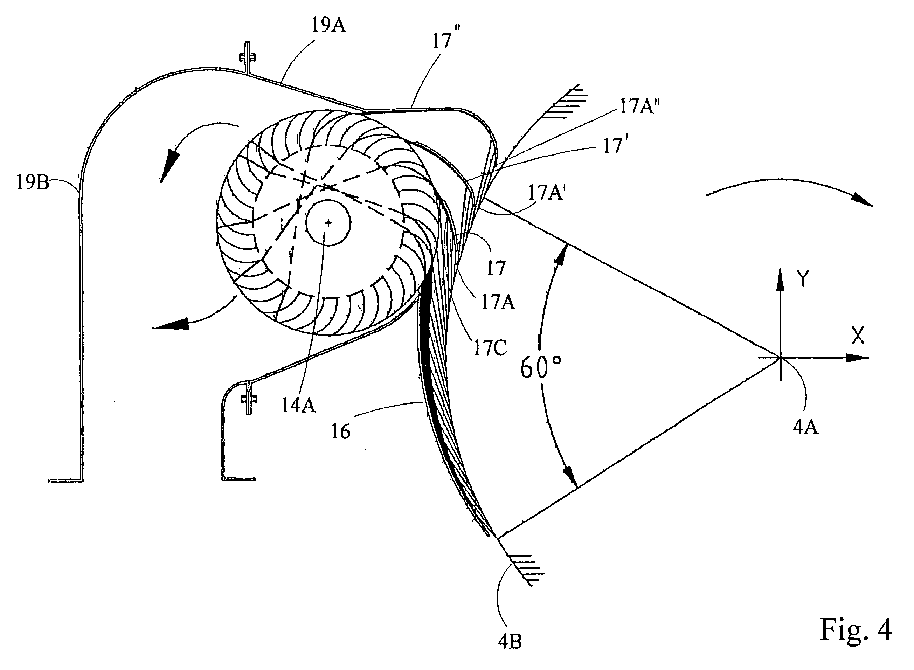

In Fig. 4 there is shown a number of guide plates 17, 17', 17" downstream of the turbine 14. The different guide plates are positioned such that the innermost edges 17A, 17A', 17A" are about equally spaced apart. In other aspects, this embodiment is similar to what is described in relation to Fig. 2.

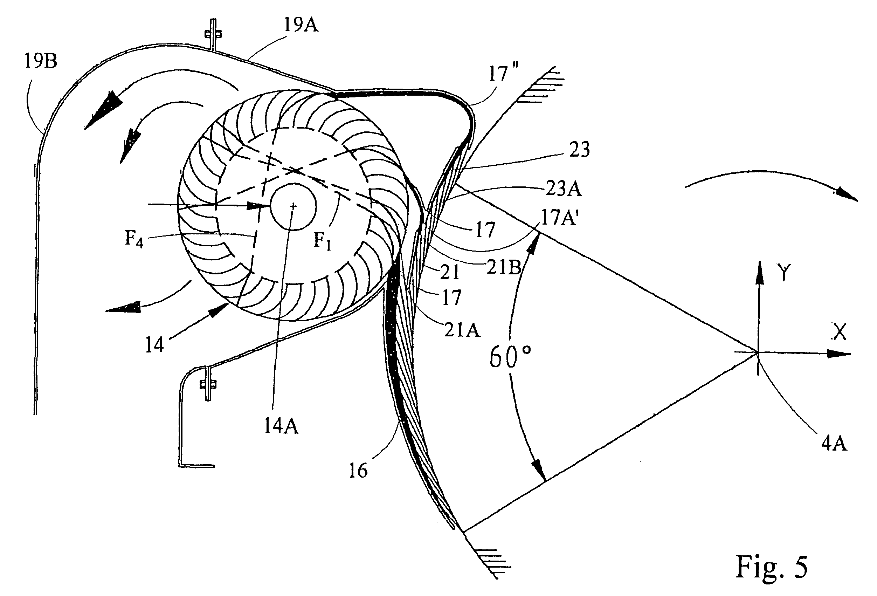

In Fig. 5 there is shown a further embodiment using several devices for guiding the water downstream of the turbine. Instead of using a single guide plate, V-shaped elements 17, 21; 17', 23 are used to direct the water for the first two guiding devices. A first device 17, 21 comprises a guide plate 17 which is substantially positioned as shown in Fig. 4. Joined with its front edge 17A there is a further guide plate 21 which is positioned substantially tangentially in relation to the periphery of the forming roll 4. Behind its rear end 21B there is formed an opening between it and the downstream end 17'A of the second guide plate 17'. In a similar manner there is a second tangentially positioned guide plate 23, which has its front end 23A joined with the front end 17A' of the second guide plate 17', such that a second opening is formed to allow the water to be directed along a third downstream guide plate 17". Also here the different flow patterns (F₁ to F₄) of the water coming from the different guide plates can be seen.

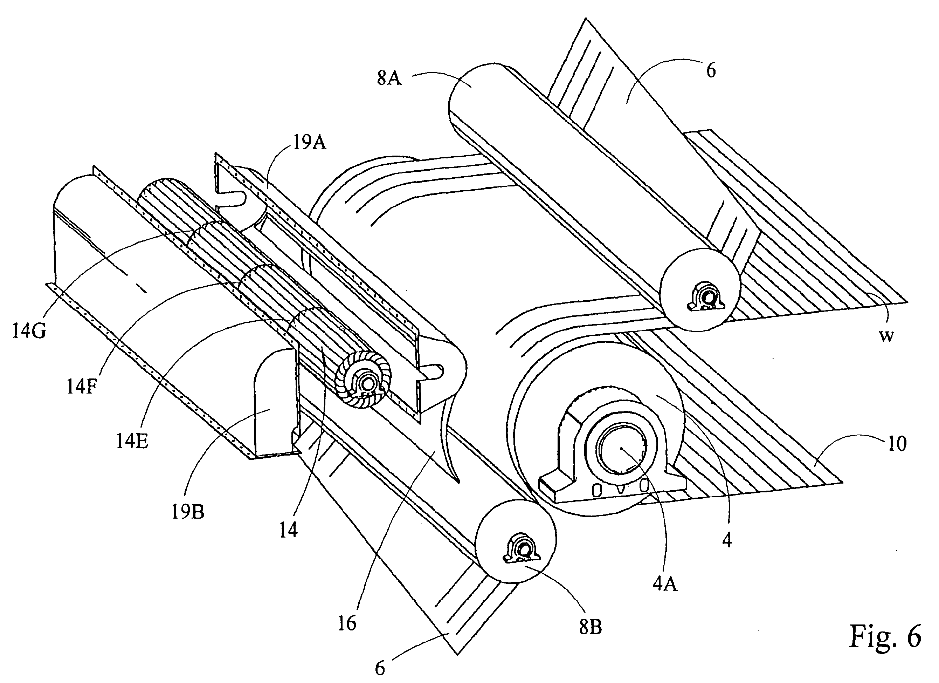

In Fig. 6 there is shown a prospective view of some essential parts of the arrangement according to the invention, except for the headbox and the electric generator, which are not shown. As can be seen, the width of different parts 4, 6, 8, 10, 14, 16 are substantially the same. For the functioning thereof it is referred to Fig. 1. It should be noted that the turbine, the cover parts 19A, 19B and the guide plate 16 are not shown in their working positions. As can be seen, the turbine 14 is divided into sections by means of annular support plates 14E, 14F, 14G, such that each section is about 1 to 1.8 m wide.

In the following the invention will be shown arranged in different positions in relation to some known kinds of formers.

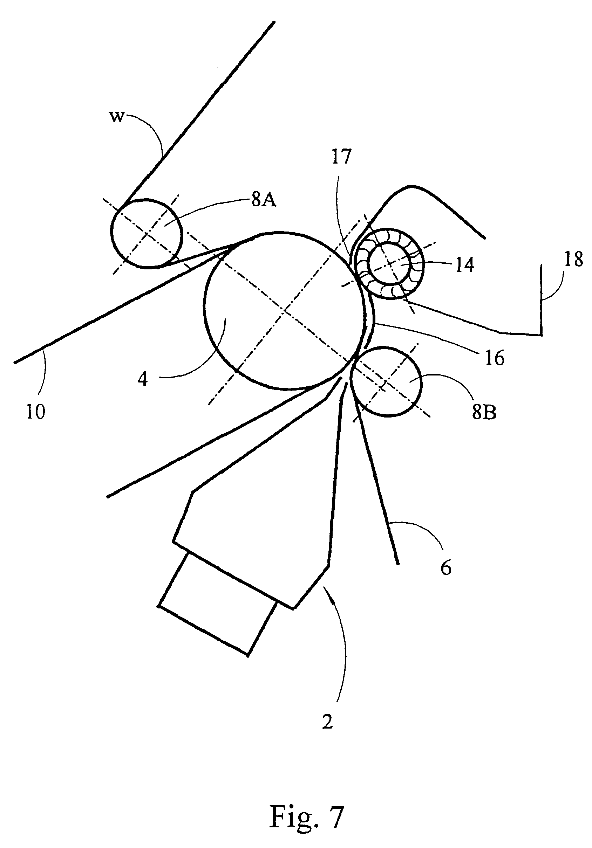

In Fig. 7 there is shown a C-former (as well as in Fig. 1), wherein the headbox 2 is positioned underneath the forming roll 4. Consequently, the web W is formed during an upward motion around the forming roll 4. The other parts 6, 10, 8, 14, 16, 17 of the invention are arranged accordingly, i.e. the guide plate 16 is positioned below the turbine 14 (but upstream thereof as in Fig. 1). Also in Fig. 7 (as well as in Fig. 1) the forming roll 4 has an impermeable surface.

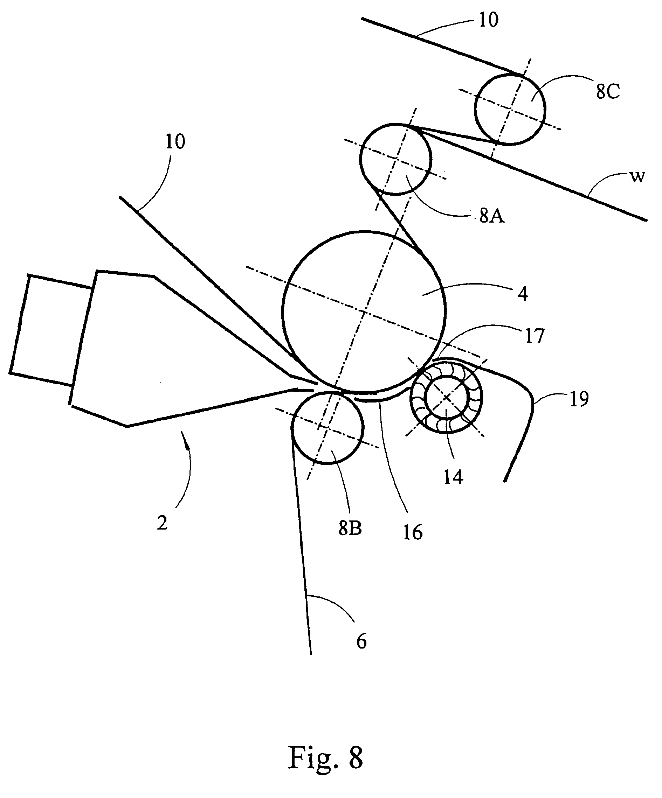

In Fig. 8 there is also shown an impermeable forming roll 4 but of the so called S-former type. According to an S-former the wire moves around one of the lead rolls 8A and then again around a third lead roll 8C. The wire 6 is guided substantially along the same principles as within the C-former, i.e. around two lead rolls 8A, 8B which urges it against the forming roll 4. The arrangement of the other parts 14, 16, 17 of this embodiment of the invention is in principle the same as described above.

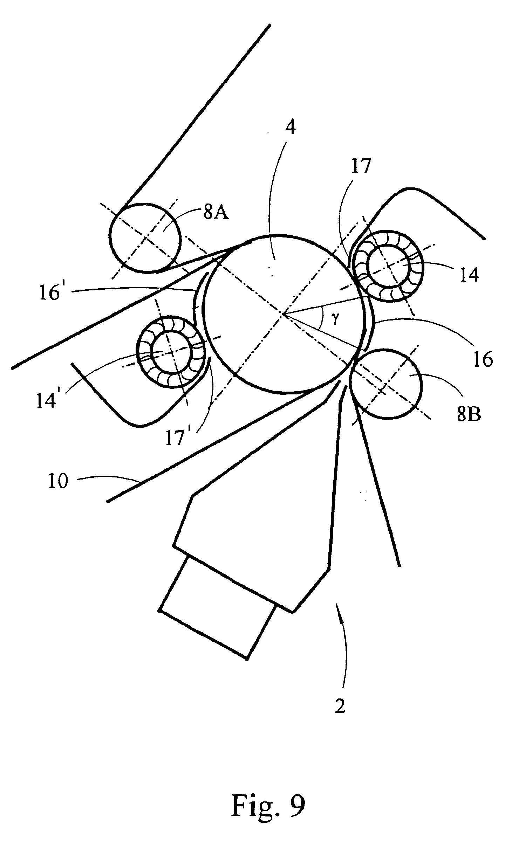

In Fig. 9 there is shown a C-former with a vacuum roll as the forming roll 4. Accordingly, the guide plate 16 may preferably have about half the angular extension γ as if the forming roll 4 has an impermeable surface, e.g. about 25 to 40°. Furthermore, it is shown that a second turbine 14' is arranged on the opposite side, as compared to the position of the first turbine 14. It has been shown that in connection with the vacuum roll 4 about 60 % of the water is drained within the first part, i.e. at the area where the guide plate 16 is positioned. The remaining amount, i.e. 40 %, is drained after the vacuum section of the roll. The vacuum section of the roll 4 begins shortly in front of the nip 12 and extends somewhat downstream (the same direction as the rotation of the forming roll) of the position where the wire 10 gets out of contact with the surface of the forming roll 4. Accordingly, the water which has been sucked into the wire and the forming roll 4 will leave it at this position and the kinetic energy thereof is recovered in the second turbine 14 in the same way as in connection with the first turbine 14. Thus, there is a first guide plate 16' and a second guide plate 17' for guiding the remaining amount of the water into this second turbine 14'.

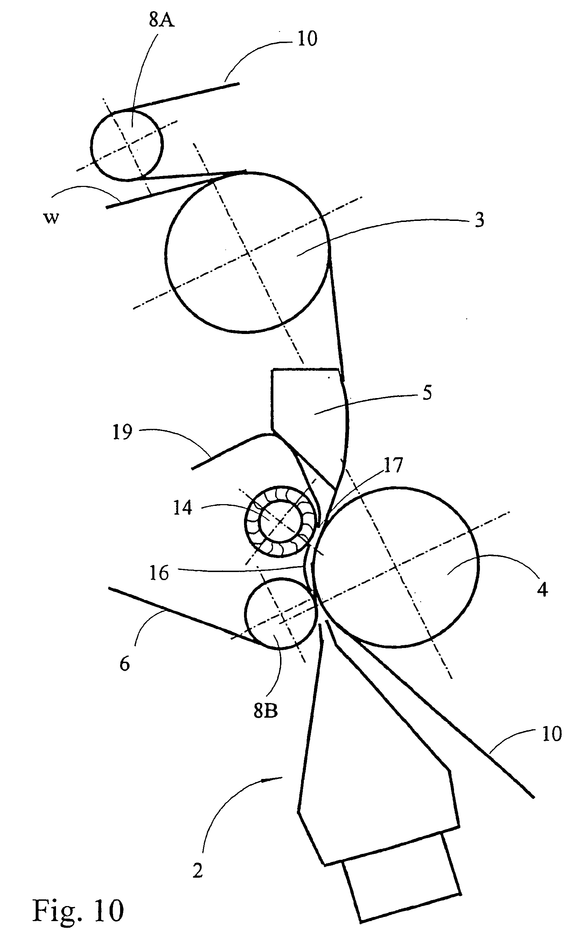

In Fig. 10 there is shown a speed former with an arrangement according to the invention. In the speed former the wires 6 and 10 jointly move with the web W therebetween, firstly over the forming roll 4, thereafter over a blade former 5, and thereafter over a vacuum roll 3, whereafter the wire 6 and the web W are separated from the wire 10, which is moved around a second lead roll 8A. The principles for the use of the energy recovering parts 14, 16, 17, 19 according to this embodiment are generally the same as described above. Alternatively the forming roll 4 may be substituted by a blade former (not shown).

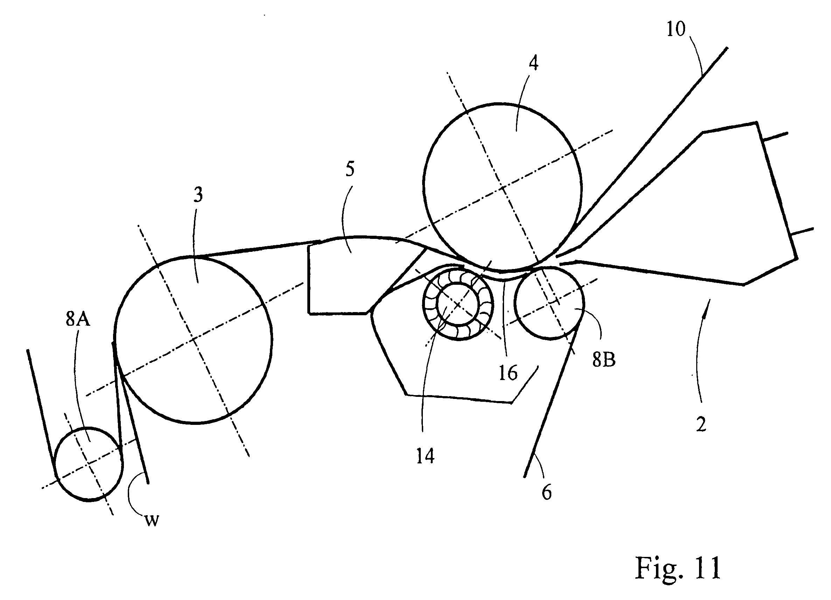

In Fig. 11 substantially the same arrangement as in Fig. 10 is shown, except for the difference that the speed former has been displaced about 90°.

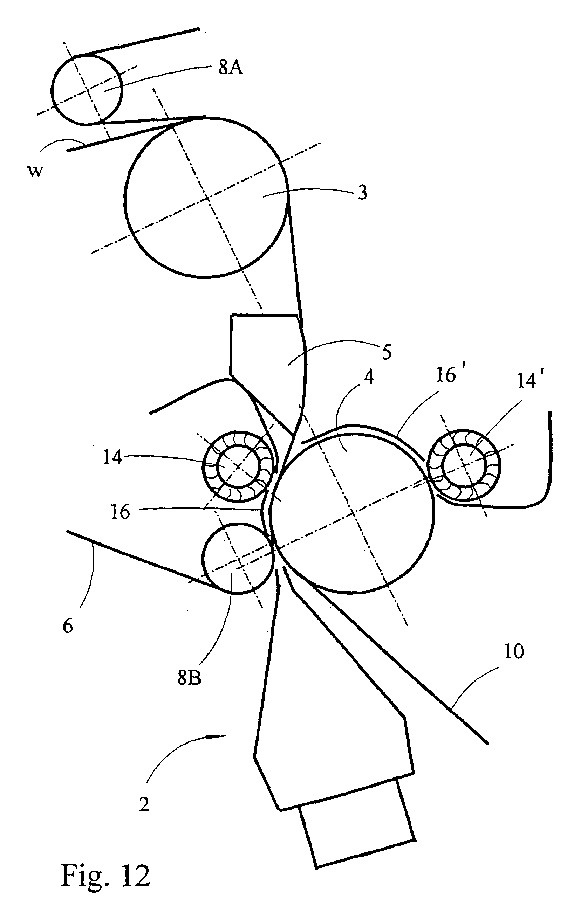

In Fig. 12 there is shown a speed former positioned in the same way as shown in Fig. 10. Contrary to what is shown in Fig. 10, there is used a vacuum roll as the forming roll 4. Two energy recovering units 14, 16; 14', 16' are used to recover energy from the drained water, substantially in the same way as described in relation to Fig. 9.

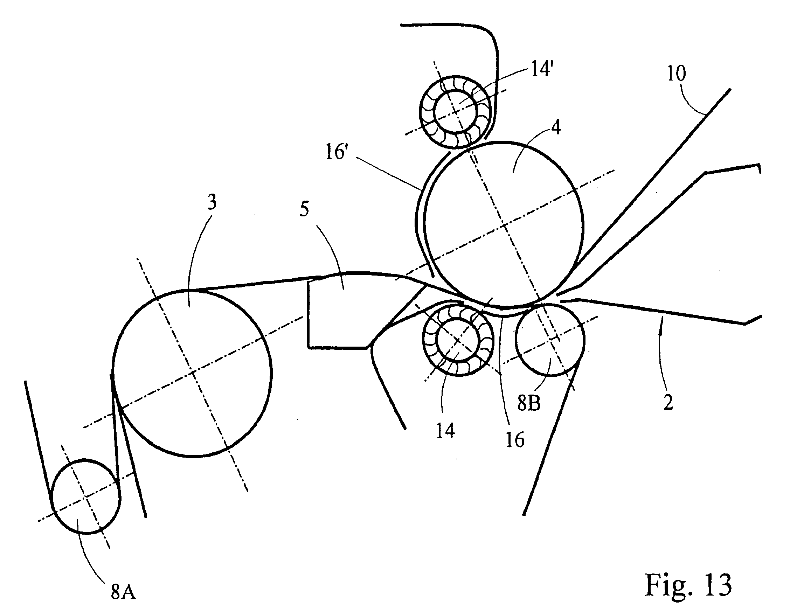

Fig. 13 is the same as Fig. 12 but with the speed former positioned displaced 90°.

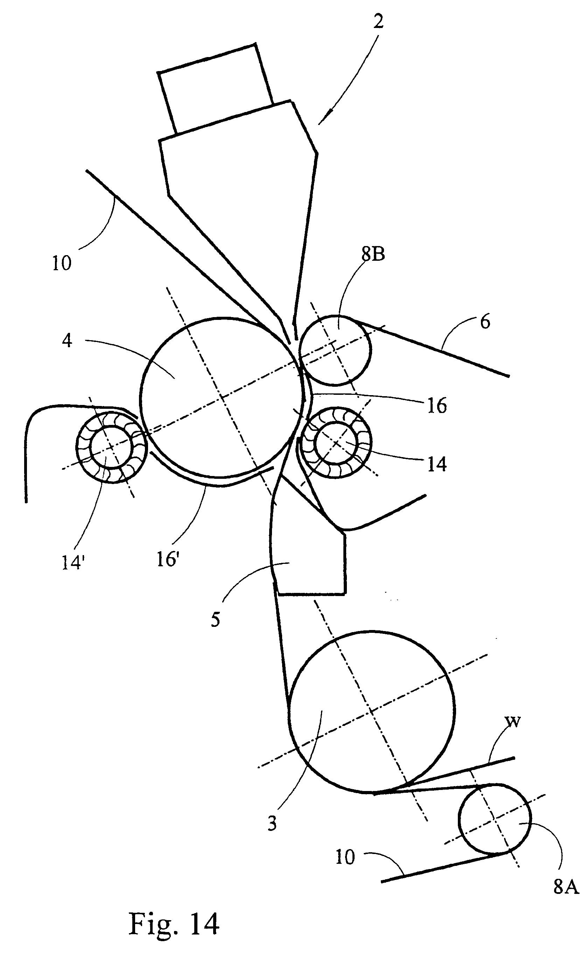

Fig. 14 also shows in principle the same as Fig. 12 but with the speed former displaced 180°.

The invention is not limited to the embodiments shown above but they may be varied within the scope of the appending claims. For instance, it is evident for the person skilled in the art that other kinds of recovering means than a Banki turbine may be used, e.g. other kind of turbines or even a device working along the principles of an endless chain conveyor. Furthermore, it is evident that the recovered energy may be used to directly drive another unit/machine, e.g. to drive a pump via an appropriate transmission. For the person skilled in the art it is also obvious that the invention may be used in connection with a forming roll and a single wire former, forming with different types of wire support. However, in this case the water will not be squeezed out through the forming clothing but drained therethrough by gravitation or by means of a vacuum box, as is known per se. In order to recover the kinetic energy the sides of the vacuum box will have to be adopted to the direction of movement of the water leaving the forming clothing, such that it is guided in an optimal manner to a turbine or some other means which is positioned to receive the guided water in an optimal manner, essentially in the same manner as described above in relation to the guiding plate. Moreover the principles of the invention may also be used in connection with a dewatering section where the water flow is directed to the sides of the paper machine, where turbines are positioned to recover the energy in accordance with the principles of the invention as described above. This latter embodiment would normally not be preferred since the moving water would have to be guided a long distance from the forming roll to the position where its kinetic energy is recovered. Tests have shown that the kinetic energy decreases exponentially in relation to a distance that the water has to flow along the guiding plate, before entry into the turbine. Accordingly, it is preferred to have the turbine positioned adjacent the forming roll as described in connection with the embodiments shown in the figures. Moreover, it is obvious for the skilled man that a felt 10 may in many installations be exchanged by a wire and vice versa. Finally, it is evident for the skilled man that the invention may be used in connection with double-wire formers which do not use any roll in the forming zone, e.g. in connection with a former described in US 4,308,097, US 4,416,730 or US 5,853,544.

## Claims

1. Method of recovering energy in a forming section of a papermaking or boardmaking machine, wherein stock from a headbox (2) is fed into a forming zone of a forming section, said forming zone including at least one looped forming fabric (6; 10) curving along a convex surface of a support member, and water is drained from the stock (21) through said at least one forming fabric (6; 10) in the forming zone to form a paper or board web (W), the water passing through said at least one fabric (6; 10) being thrown out from the forming zone and possessing kinetic energy, **characterized by** placing a movable component (14) in the water thrown out from the forming zone, so as to cause the water to move the component (14), and thereby recovering part of the kinetic energy.

2. Method according to claim 1, **characterized by** providing a turbine (14) preferably a reaction turbine, for use as the movable component, and mounting the turbine so as to be rotated by the water thrown out from the forming zone, preferably water that has passed through said at least one forming fabric (6; 10).

3. Method according to claim 1 or 2, **characterized by** providing two looped forming (6; 10) fabrics in a twin wire former arrangement, said two looped forming fabrics curving along the convex surface of the support member and defining a converging forming zone, draining water from the stock through at least an outer one (6) of the two fabrics in the forming zone in relation to the convex surface of the support member to form a paper or board web (W) and mounting the movable component (14) inside the loop of said outer one of the forming fabrics.

4. Method according to claim 3, **characterized by** supporting the two forming fabrics on a rotatable forming roll (4), said roll being included in the support member.

5. Method according to claim 3, **characterized by** supporting the two forming fabrics on a forming shoe having a convex support surface for supporting the fabrics, said shoe being included in the support member.

6. Method according to claim 3, **characterized by** supporting the two forming fabrics on a curved series of dewatering blades spaced from one another in the machine direction, said blades being included in the support member and the convex support surface thereof.

7. Method according to claim 1, **characterized by** at least one guide plate (16) guiding the moving water into the turbine (14).

8. Method according to claim 7, **characterized by** the water moving along a curved path (16C) along the major part of said guide plate (16).

9. Method according to claim 5, **characterized by** the radius R2 of a major part of said curved path (16C) being substantially constant and larger than the radius R1 of the forming roll (4), but smaller than 120 % ofRl, i.e. R1<R2<R1 x 1,2.

10. Method according to claim 9, **characterized by** the angular extension (γ) of the guide plate (16) covering between 20 to 90° of the circumference of the forming roll (4).

11. Method according to claim 10, **characterized by** the forming roll (4) being a vacuum roll with perforations in its surface and that the angular extension of the guide plate (16) is between 20 to 50°, preferably 25 to 40°.

12. Method according to claim 10, **characterized by** the forming roll having an impermeable surface and that the angular extension γ of guide plate (16) is between 40 and 80°, preferably 50 to 70°.

13. Method according to claim 1, **characterized by** the speed of the web (w) being more than 1000 m/min, preferably more than 1500 m/min more preferred more than 1800 m/min.

14. Method according to claim 1, **characterized by** at least 0,2 m³/sec/m being squeezed out through the said wire (6), preferably at least 0,3 m³/sec and more preferred at least 0,4 m³.

15. Method according to claim 1, **characterised by** using an electric generator to transform said kinetic energy to electric energy, preferably by supplying said electric energy to a pump, and more preferred to a stock pump.

16. Arrangement in papermaking or board machine,for performing the method according to claim 1, comprising a headbox (2) for supplying a stock (21), a forming zone, including at least one looped forming fabric (6; 10) and a support member (4) with a convex surface (4B), said fabric (6; 10) being arranged to run a part (α) of said convex surface (4B) of said support member (4) and so defining a forming zone, wherein a paper or board web (W) is formed, the stock (21) being supplied by said headbox (2) into said forming zone and water being drained from the stock (21) through said at least one forming fabric (6; 10) in the forming zone to form the paper or board web (W), the water passing through said at least one fabric (6;10) being thrown out from the forming zone and possessing kinetic energy, **characterized in that** a movable component (14) is positioned adjacent said forming zone to recover at least some of the kinetic energy of the water that is drained from the stock (21).

17. Arrangement according to claim 16, **characterized in that** said movable component (14) is a turbine (14), preferably a reaction turbine, which is positioned so as to be rotated by water that has passed through said at least one forming fabric (6; 10).

18. Arrangement according to claim 16 or 17, **characterized in that** there are two looped forming fabrics (6; 10) in a twin wire former arrangement, wherein the second forming fabric (6) is arranged to run a certain angular extension (β) on top of the first forming fabric (10) curving along said convex surface (4B) of said support member (4) to form a converging forming zone, wherein water is drained through at least said second forming fabric (6) and **in that** the movable component (14) is positioned inside the loop of said second forming fabric (6).

19. Arrangement according to claim 18, **characterized in that** said convex surface (4B) forms a part of a rotatable forming roll (4).

20. Arrangement according to claim 18, **characterized in that** said convex surface (4B) forms a part of a forming shoe.

21. Arrangement according to claim 18, **characterized in that** said convex surface (4B) is formed by a series of dewatering blades spaced from one another in the machine direction.

22. Arrangement according to claim 17, **characterized by** the turbine (14) being of the reaction type, preferably a Banki turbine.

23. Arrangement according to claim 16, **characterized by** a guiding arrangement (16, 17) for guiding the moving water that is squeezed out through the fabric (6) into the turbine (14).

24. Arrangement according to claim 23, **characterized in that** said guiding arrangement (16, 17) comprises a guide plate (16) which is positioned in close relationship to the convex surface (4B) of the forming zone (4).

25. Arrangement according to claim 24, **characterized in that** a major part of said guide plate (16) has a radius R2 which is substantially constant and equal to or larger than the radius R1 of said convex surface (4B), wherein preferably R1<R2<R1 x 1,2.

26. Arrangement according to claim 24, **characterized in that** said guide plate (16) has an upstream end (16A) and a downstream end (16B) and that the angular extension (γ) between said end points (16A, 16B) is between 20 to 90°, preferably 30 to 70°.

27. Arrangement according to claim 26, **characterized in that** the angular extension (α) of the first forming fabric (10) is larger than the angular extension (β) of the second forming fabric (6) and that the angular extension (γ) of the guide plate (16) is less than the angular extension (β) of the second forming fabric (6).

28. Arrangement according to claim 24, **characterized in that** said guide arrangement comprises a second guide plate (17) downstream of said guide plate (16), which second guide plate (17) has a cross sectional length (l₂) which is substantially shorter than the cross sectional length of the guide plate (16).

29. Arrangement according to claim 28, **characterized in that** said second guide plate (17) is curved and that its curvature is opposite to the curvature of the guide plate (16).

30. Arrangement according to claim 17, **characterized in that** the axial extension of the turbine (14) is substantially the same as the axial extension of the wire (6), which preferably has an axial extension which is substantially the same as the axial extension of the forming zone (4).

31. Arrangement according to claim 30, **characterized in that** the outer diameter of the turbine ØT is substantially smaller than the radius R1 of the said convex surface (4B), wherein preferably R1x0,5<ØT<R1x0,9.

32. Arrangement according to claim 17, **characterized in that** the turbine (14) is positioned with its axis (14A) in parallel with the axis (4A) of a forming roll (4) and that the turbine (14) and the forming roll (4) are positioned in relationship such that the smallest distance (Z) between the periphery (14B) of the turbine and the periphery (4B) of the forming roll is between 5-700 mm, preferably 5-200 mm.

33. Arrangement according to claim 16, **characterized in that** the shaft (14A) of the movable component (14) is connected to an electric generator (11).

## Patentansprüche

1. Verfahren zum Wiedergewinnen von Energie in einem Bahnbildungsabschnitt einer Papier- oder Kartonmaschine, in welcher Faserstoff von einem Stoffauflauf (2) in eine Bahnbildungszone eines Bahnbildungsabschnittes geführt wird, wobei die Blattbildungszone wenigstens ein geschlossenes Bahnbildungssieb (6; 10) aufweist, das entlang einer konvexen Oberfläche eines Abstützungsbauteils geführt wird und Wasser aus dem Faserstoff (21) durch das wenigstens eine Bahnbildungssieb (6; 10) in der Bahnbildungszone zum Herstellen einer Papier- oder eines Kartonbahn (W) abfiltriert wird, wobei das Wasser, welches durch das wenigstens eine Sieb (6; 10) hindurchströmt, aus der Bahnbildungszone ausgeschleudert wird und kinetische Energie aufweist,
**dadurch gekennzeichnet,**
**dass** in dem Bereich, in welchem das Wasser aus der Bahnbildungszone ausgeschleudert wird, ein bewegliches Bauteil (14) in der Art angeordnet ist, dass das Wasser dieses Bauteil (14) in Bewegung versetzt und hierdurch ein Teil der kinetischen Energie zurückgewonnen wird.

2. Verfahren gemäß Anspruch 1,
**dadurch gekennzeichnet,**
**dass** eine Turbine (14), bevorzugt eine Überdruckturbine, für die Verwendung als bewegliches Bauteil bereitgestellt wird und die Turbine in der Art befestigt ist, dass sie durch das Wasser, welches aus der Bahnbildungszone ausgeschleudert wird, gedreht wird, wobei das Wasser bevorzugt jenes ist, das durch das Bahnbildungssieb (6; 10) hindurchgetreten ist.

3. Verfahren gemäß einem der Ansprüche 1 oder 2,
**dadurch gekennzeichnet,**
**dass** zwei geschlossene Bahnbildungssiebe in einer Doppelsiebformeranordnung bereitgestellt werden, wobei die beiden geschlossenen Bahnbildungssiebe entlang einer konvexen Oberfläche eines Abstützungselementes geführt werden, um eine konvergierende Bahnbildungszone zu bestimmen, und Wasser von dem Faserstoff durch wenigstens ein äußeres der beiden Siebe (6) in der Bahnbildungszone in Bezug auf die konvexe Oberfläche des Abstützungsbauteils abfiltriert wird, um eine Papier- oder Kartonbahn (W) zu bilden, und die bewegliche Komponente (14) innerhalb der Schleife des äußeren der Bahnbildungssiebe angeordnet ist.

4. Verfahren gemäß Anspruch 3,
**dadurch gekennzeichnet,**
**dass** die beiden Bahnbildungssiebe auf einer drehbaren Formierwalze (4) abgestützt sind, wobei die Walze Bestandteil des Abstützungsbauteils ist.

5. Verfahren gemäß Anspruch 3,
**dadurch gekennzeichnet,**
**dass** die zwei Bahnbildungssiebe auf einen Bahnbildungsschuh, welcher eine konvexe Unterstützungsfläche zum Abstützen der Siebe aufweist, gestützt werden, wobei der Schuh Bestandteil des Abstützungsbauteils ist.

6. Verfahren gemäß Anspruch 3,
**dadurch gekennzeichnet,**
**dass** die beiden Bahnbildungssiebe auf einer gekrümmten Reihe von Entwässerungsleisten, welche mit Abstand zueinander in Richtung des Maschinenlaufes angeordnet sind, abgestützt werden, wobei die Leisten Bestandteil des Abstützungsbauteils und der konvexe Abstützungsfläche sind.

7. Verfahren gemäß Anspruch 1,
**dadurch gekennzeichnet,**
**dass** wenigstens eine Führungsplatte (16) das sich bewegende Wasser in die Turbine (14) leitet.

8. Verfahren gemäß Anspruch 7,
**dadurch gekennzeichnet,**
**dass** das Wasser entlang eines gekrümmten Wegs (16C) entlang des Hauptwegs der Führungsplatte (16) strömt.

9. Verfahren gemäß Anspruch 5,
**dadurch gekennzeichnet,**
**dass** der Radius R2 eines Hauptteils des gekrümmten Weges (16C) im wesentlichen konstant und größer als der Radius R1 der Formierwalze (4), aber kleiner als 120 % des Radius R1, z. B. R1<R2<R1 x 1,2 ist.

10. Verfahren gemäß Anspruch 9,
**dadurch gekennzeichnet,**
**dass** die gewinkelte Verlängerung (γ) der Führungsplatte (16) 20° bis 90° des Umfangs der Formierwalze (4) abdeckt.

11. Verfahren gemäß Anspruch 10,
**dadurch gekennzeichnet,**
**dass** die Formierwalze (4) eine Vakuumwalze mit Öffnungen in ihrer Oberfläche ist und dass die gewinkelte Verlängerung der Führungsplatte (16) zwischen 20° und 50°, bevorzugt zwischen 25° und 40°, ist.

12. Verfahren gemäß Anspruch 10,
**dadurch gekennzeichnet,**
**dass** die Formierwalze eine undurchlässige Oberfläche hat und die gewinkelte Verlängerung (γ) der Führungsplatte (16) zwischen 40° und 80°, bevorzugt zwischen 50° bis 70° ist.

13. Verfahren gemäß Anspruch 1,
**dadurch gekennzeichnet,**
**dass** die Geschwindigkeit der Bahn (W) größer als 1.000 m/min, bevorzugt größer als 1.500 m/min und besonders bevorzugt größer als 1.800 m/min ist.

14. Verfahren gemäß Anspruch 1,
**dadurch gekennzeichnet,**
**dass** der Durchsatz durch das Sieb (6) wenigstens 0,2 m³/sec/m, bevorzugt wenigstens 0,3 m³/sec und besonders bevorzugt wenigstens 0,4 m³ beträgt.

15. Verfahren gemäß Anspruch 1,
**dadurch gekennzeichnet,**
**dass** ein elektrischer Generator zum Umwandeln der kinetischen Energie in elektrische Energie verwendet wird und bevorzugt die elektrische Energie eine Pumpe und besonders bevorzugt eine Stoffpumpe versorgt.

16. Anordnung in einer Papier- oder Kartonmaschine zum Einsatz des Verfahrens gemäß Anspruch 1, welche einen Stoffauflauf (2) zum Bereitstellen eines Faserstoffes (21), eine Bahnbildungszone, umfassend wenigstens ein geschlossenes Bahnbildungssieb (6; 10) und ein Abstützungsbauteil (4) mit einer konvexen Oberfläche (4B), aufweist, wobei das Sieb (6; 10) zum Bewegen eines Teils (α) der konvexen Fläche (4B) des Unterstützungsbauteils (4) angeordnet ist und hierdurch eine Bahnbildungszone bestimmt wird, innerhalb welcher eine Papier- oder Kartonbahn (W) gebildet wird, der Faserstoff (21) durch einen Stoffauflauf (2) in die Bahnbildungszone geführt wird und Wasser aus dem Faserstoff (21) durch wenigstens ein Bahnbildungssieb (6; 10) in der Bahnbildungszone abfiltriert wird, um eine Papier- oder Kartonbahn (W) zu bilden und das Wasser durch wenigstens ein Sieb (6; 10) aus der Bahnbildungszone ausgeschleudert wird und kinetische Energie aufweist,
**dadurch gekennzeichnet,**
**dass** ein bewegliches Bauteil (14) in der Nähe der Bahnbildungszone angeordnet ist, um wenigstens etwas der kinetischen Energie des Wassers, das aus dem Faserstoff (21) abfiltriert wird, wieder zu gewinnen.

17. Anordnung gemäß Anspruch 16,
**dadurch gekennzeichnet,**
**dass** das bewegliche Bauteil (14) eine Turbine (14), bevorzugt eine Überdruckturbine, ist, welche in der Art angeordnet wird, dass sie durch das Wasser, welches durch wenigstens eines der Bahnbildungssiebe (6; 10) hindurchtritt, angetrieben wird.

18. Anordnung gemäß Anspruch 16 oder 17,
**dadurch gekennzeichnet,**
**dass** zwei geschlossene Bahnbildungssiebe (6; 10) in einer Doppelsiebformieranordnung vorgesehen sind, wobei das zweite Bahnbildungssieb (6) so angeordnet ist, um einen gewinkelten Anbau (β) oberhalb des ersten Bahnbildungssiebes (10) anzutreiben und entlang einer konvexen Oberfläche (4B) des Abstützungsbauteils (4) entlangläuft, um eine konvergierende Bahnbildungszone zu bilden, wobei Wasser durch wenigstens das zweite Bahnbildungssieb (6) hindurch abfiltriert wird und in welcher das bewegliche Bauteil (14) innerhalb der Schleife des zweiten Bahnbildungssiebes (6) angeordnet ist.

19. Anordnung gemäß Anspruch 18,
**dadurch gekennzeichnet,**
**dass** die konvexe Oberfläche (4B) einen Teil der drehbeweglichen Formierwalze (4) bildet.

20. Anordnung gemäß Anspruch 18,
**dadurch gekennzeichnet,**
**dass** die konvexe Oberfläche (4B) einen Teil eines Formierschuhes bildet.

21. Anordnung gemäß Anspruch 18,
**dadurch gekennzeichnet,**
**dass** die konvexe Oberfläche (4B) durch eine Reihe von Entwässerungsleisten, die zueinander beabstandet in Maschinenrichtung angeordnet sind, gebildet wird.

22. Anordnung gemäß Anspruch 17,
**dadurch gekennzeichnet,**
**dass** die Turbine (14) eine Überdruckturbine, bevorzugt eine Banki-Turbine, ist.

23. Anordnung gemäß Anspruch 16,
**dadurch gekennzeichnet,**
**dass** durch die führende Anordnung (16; 17) das Wasser, welches durch das Sieb (6) hindurch gepresst wurde, in die Turbine (14) geleitet wird.

24. Anordnung gemäß Anspruch 23,
**dadurch gekennzeichnet,**
**dass** die führende Anordnung (16; 17) eine Führungsplatte (16) aufweist, welche in unmittelbarem Bezug zu der konvexen Oberfläche (4B) der Bahnbildungszone (4) angeordnet ist.

25. Anordnung gemäß Anspruch 24,
**dadurch gekennzeichnet,**
**dass** ein Hauptteil der Führungsplatte (16) einen Radius R2 aufweist, welcher im Wesentlichen konstant ist und gleich zu oder größer ist als der Radius R1 der konvexen Oberfläche (4B), wobei bevorzugt R1<R2<R1 x 1,2 ist.

26. Anordnung gemäß Anspruch 24,
**dadurch gekennzeichnet,**
**dass** die Führungsplatte (16) ein stromaufwärtiges Ende (16A) und ein stromabwärtiges Ende (16B) aufweist und das die gewinkelte Verlängerung (γ) zwischen den Punkten (16A; 16B) zwischen 20° bis 90°, bevorzugt 30° bis 70° beträgt.

27. Anordnung gemäß Anspruch 26,
**dadurch gekennzeichnet,**
**dass** die gewinkelte Verlängerung (α) des ersten Bahnbildungssiebes (10) größer ist als die gewinkelte Verlängerung (β) des zweiten Bahnbildungssiebes (6) und dass die gewinkelte Verlängerung (γ) der Führungsplatte (16) kleiner ist als die gewinkelte Verlängerung (β) des zweiten Bahnbildungssiebes (6).

28. Anordnung gemäß Anspruch 24,
**dadurch gekennzeichnet,**
**dass** die führende Anordnung eine zweite Führungsplatte (17) stromabwärts der Führungsplatte (16) aufweist, wobei die zweite Führungsplatte (17) eine Querschnittslänge (l₂) aufweist, welche im Wesentlichen kürzer ist als die Querschnittslänge der Führungsplatte (16).

29. Anordnung gemäß Anspruch 28,
**dadurch gekennzeichnet,**
**dass** die zweite Führungsplatte (17) gebogen ist und dass die Krümmung gegensätzlich zu der Krümmung der Führungsplatte (16) ist.

30. Anordnung gemäß Anspruch 17,
**dadurch gekennzeichnet,**
**dass** die axiale Erstreckung der Turbine (14) im Wesentlichen dieselbe ist, als die axiale Erstreckung des Siebes (6), welches bevorzugt eine axiale Erstreckung aufweist, welche im Wesentlichen dieselbe axiale Erstreckung wie die Bahnbildungszone (4) ist.

31. Anordnung gemäß Anspruch 30,
**dadurch gekennzeichnet,**
**dass** der äußere Durchmesser der Turbine ØT im Wesentlichen kleiner ist als der Radius R1 der konvexen Oberfläche (4B), welcher bevorzugt R1x0,5<ØT<R1x0,9 ist.

32. Anordnung gemäß Anspruch 17,
**dadurch gekennzeichnet,**
**dass** die Turbine (14) mit ihrer Achse (14A) parallel zu der Achse (4A) einer Formierwalze (4) angeordnet wird und dass die Turbine (14) und die Formierwalze (4) in der Art zueinander angeordnet werden, dass der geringste Abstand (Z) zwischen der Peripherie (14B) der Turbine und der Peripherie (4B) der Formierwalze zwischen 5 - 700 mm, bevorzugt zwischen 5 - 200 mm ist.

33. Anordnung gemäß Anspruch 16,
**dadurch gekennzeichnet,**
**dass** die Achse (14A) des beweglichen Bauteils (14) mit einem elektrischen Generator (11) verbunden ist.

## Revendications

1. Procédé de récupération d'énergie dans une section de formage d'une machine de fabrication de papier ou de carton, dans lequel de la pâte à papier provenant d'une caisse d'arrivée (2) est introduite dans une zone de formage d'une section de formage, ladite zone de formage incluant au moins un tissu de formage bouclé (6 ; 10) courbé le long d'une surface convexe d'un élément de support, et dans lequel de l'eau est drainée de la pâte à papier (21) à travers ledit au moins un tissu de formage (6 ; 10) dans la zone de formage pour former une bande continue (W) de papier ou de carton, l'eau passant à travers ledit au moins un tissu (6 ; 10) étant chassée de la zone de formage et possédant une certaine énergie cinétique, **caractérisé par** la mise en place d'un composant mobile (14) dans l'eau chassée de la zone de formage de façon à ce que l'eau déplace le composant (14), ce qui permet de récupérer une partie de l'énergie cinétique.

2. Procédé selon la revendication 1, **caractérisé en ce qu'**il est prévu une turbine (14), de préférence une turbine à réaction, destinée être utilisée comme composant mobile, et **en ce que** la turbine est montée de façon à pouvoir être entraînée en rotation par l'eau chassée de la zone de formage, de préférence l'eau qui est passée à travers ledit au moins un tissu de formage (6 ; 10).

3. Procédé selon la revendication 1 ou 2, **caractérisé en ce qu'**il est prévu deux tissus de formage bouclés (6 ; 10) dans un double agencement de fils, lesdits deux tissus de formage bouclés étant courbés le long de la surface convexe de l'élément de support et définissant une zone de formage convergente, **en ce que** l'eau est drainée de la pâte à papier à travers au moins un tissu extérieur (6) des deux tissus dans la zone de formage en relation avec la surface convexe de l'élément de support pour former une bande continue (W) de papier ou de carton et **en ce que** le composant mobile (14) est monté à l'intérieur de la boucle formée par ledit tissu extérieur des tissus de formage.

4. Procédé selon la revendication 3, **caractérisé en ce que** les deux tissus de formage sont supportés par un rouleau de formage rotatif (4), ledit rouleau étant inclus dans l'élément de support.

5. Procédé selon la revendication 3, **caractérisé en ce que** les deux tissus de formage sont supportés par un sabot de formage présentant une surface de support convexe destinée à supporter les tissus, ledit sabot étant inclus dans l'élément de support.

6. Procédé selon la revendication 3, **caractérisé en ce que** les deux tissus de formage sont supportés par une série courbée de lames d'égouttage espacées l'une de l'autre dans la direction de la machine, lesdites lames étant incluses dans l'élément de support et la surface de support convexe de celui-ci.

7. Procédé selon la revendication 1, **caractérisé par** au moins une plaque de guidage (16) guidant l'eau en mouvement vers l'intérieur de la turbine (14).

8. Procédé selon la revendication 7, **caractérisé en ce que** l'eau se déplace le long d'un trajet incurvé (16C) le long de la partie principale de ladite plaque de guidage (16).

9. Procédé selon la revendication 5, **caractérisé en ce que** le rayon R2 de la plus grande partie dudit trajet incurvé (16C) est sensiblement constant et supérieur au rayon R1 du rouleau de formage (4), mais inférieur à 120% de R1, c'est-à-dire que l'on a R1<R2<R1 x 1,2.

10. Procédé selon la revendication 9, **caractérisé en ce que** l'étendue angulaire (γ) de la plaque de guidage (16) est comprise entre 20 et 90° de la circonférence du rouleau de formage (4).

11. Procédé selon la revendication 10, **caractérisé en ce que** le rouleau de formage (4) est un rouleau à dépression doté de perforations dans sa surface et **en ce que** l'étendue angulaire de la plaque de guidage (16) est comprise entre 20 et 50°, de préférence entre 25 et 40°.

12. Procédé selon la revendication 10, **caractérisé en ce que** le rouleau de formage présente une surface imperméable et **en ce que** l'étendue angulaire de la plaque de guidage (16) est comprise entre 40 et 80°, de préférence entre 50 et 70°.

13. Procédé selon la revendication 1, **caractérisé en ce que** la vitesse de la bande continue est supérieure à 1000 m/min, de préférence supérieure à 1500 m/min, de façon plus préférée supérieure à 1800 m/min.

14. Procédé selon la revendication 1, **caractérisé en ce que** au moins 0,2 m³/s/m sont exprimés dudit fil (6), de préférence au moins 0,3 m³/s/m et de façon plus préférée au moins 0,4 m³/s/m.

15. Procédé selon la revendication 1, **caractérisé en ce que** l'on utilise un générateur électrique pour transformer ladite énergie cinétique en énergie électrique, de préférence en délivrant ladite énergie électrique à une pompe, et plus préférablement une pompe de pâte à papier.

16. Dispositif dans une machine de fabrication de papier ou de carton, destiné à mettre en oeuvre le procédé selon la revendication 1, ledit dispositif comprenant une caisse d'arrivée (2) destiné à délivrer une pâte à papier (21), une zone de formage, incluant au moins un tissu de formage bouclé (6 ; 10) et un élément de support (4), présentant une surface convexe (4B), ledit tissu (6 ; 10) étant agencé pour parcourir une partie (α) de ladite surface convexe (4B) dudit élément de support (4) et définissant ainsi une zone de formage dans laquelle une bande continue (W) de papier ou de carton est formée, la pâte à papier (21) étant délivrée par ladite caisse d'arrivée (2) dans ladite zone de formage et l'eau étant drainée de la pâte à papier (21) à travers ledit au moins un tissu de formage (6 ; 10) dans la zone de formage pour former la bande continue de papier (W) ou de carton, l'eau passant à travers ledit au moins un tissu (6 ; 10) étant chassée de la zone de formage et possédant une certaine énergie cinétique, **caractérisé en ce qu'**un composant mobile (14) est positionné près de ladite zone de formage pour récupérer au moins une partie de l'énergie cinétique de l'eau qui est drainée de la pâte à papier (21).

17. Dispositif selon la revendication 16, **caractérisé en ce que** ledit composant mobile (14) est une turbine (14), de préférence une turbine à réaction, qui est positionnée de manière à être entraînée en rotation par l'eau qui est passée à travers ledit au moins un tissu de formage (6 ; 10).

18. Dispositif selon la revendication 16 ou 17, **caractérisé en ce qu'**il est prévu deux tissus de formage bouclés (6 ; 10) dans un double agencement de fils, le deuxième tissu de formage (6) étant destiné à parcourir une certaine étendue angulaire (β) sur la partie supérieure du premier tissu de formage (10) courbé le long de ladite surface convexe (4B) dudit élément de support (4) pour former une zone de formage convergente, l'eau étant drainée à travers au moins ledit deuxième tissu de formage (6) et **en ce que** le composant mobile (14) est positionné à l'intérieur de la boucle dudit deuxième tissu de formage (6).

19. Dispositif selon la revendication 18, **caractérisé en ce que** ladite surface convexe (4B) forme une partie d'un rouleau de formage rotatif (4).

20. Dispositif selon la revendication 18, **caractérisé en ce que** ladite surface convexe (4B) forme une partie d'un sabot de formage.

21. Dispositif selon la revendication 18, **caractérisé en ce que** ladite surface convexe (4) est formée par une série de lames d'égouttage espacées l'une de l'autre dans la direction de la machine.

22. Dispositif selon la revendication 17, **caractérisé en ce que** la turbine (14) est du type à réaction, de préférence une turbine de Banki.

23. Dispositif selon la revendication 16, **caractérisé en ce qu'**un dispositif de guidage (16, 17) est destiné à guider l'eau en mouvement qui est exprimée à travers le tissu (6) vers l'intérieur de la turbine (14).

24. Dispositif selon la revendication 23, **caractérisé en ce que** ledit dispositif de guidage (16, 17) comprend une plaque de guidage (16, 17) qui est positionnée à proximité de la surface convexe (4B) de la zone de formage (4).

25. Dispositif selon la revendication 24, **caractérisé en ce que** la plus grande partie de la plaque de guidage (16) a un rayon R2 qui est sensiblement constant et supérieur ou égal au rayon R1 de ladite surface convexe (4B), avec de préférence de R1<R2<R1 x 1,2.

26. Dispositif selon la revendication 24, **caractérisé en ce que** ladite plaque de guidage (16) comporte une extrémité amont (16A) et une extrémité aval (16B) et **en ce que** l'étendue angulaire (γ) entre lesdits points d'extrémité (16A, 16B) est comprise entre 20 et 90°, de préférence entre 30 et 70°.

27. Dispositif selon la revendication 26, **caractérisé en ce que** l'étendue angulaire (α) du premier tissu de formage (10) est supérieure à l'étendue angulaire (β) du deuxième tissu de formage (6) et **en ce que** l'étendue angulaire (γ) de la plaque de guidage (16) est inférieure à l'étendue angulaire (β) du deuxième tissu de formage (6).

28. Dispositif selon la revendication 24, **caractérisé en ce que** ledit dispositif de guidage comprend une deuxième plaque de guidage (17) en aval de ladite plaque de guidage (16), laquelle deuxième plaque de guidage (17) a une longueur en coupe transversale (l₂) qui est sensiblement inférieure à la longueur en coupe transversale de la plaque de guidage (16).

29. Dispositif selon la revendication 28, **caractérisé en ce que** ladite deuxième plaque de guidage (17) est courbée et **en ce que** sa courbure est opposée à la courbure de la plaque de guidage (16).

30. Dispositif selon la revendication 17, **caractérisé en ce que** l'étendue axiale de la turbine (14) est sensiblement identique à l'étendue axiale du fil (6), qui a de préférence une étendue axiale qui est sensiblement identique à l'étendue axiale de la zone de formage (4).

31. Dispositif selon la revendication 30, **caractérisé en ce que** le diamètre extérieur de la turbine ∅T est sensiblement inférieur au rayon R1 de ladite surface convexe (4B), avec de préférence R1 x 0,5<∅T<R1 x 0,9.

32. Dispositif selon la revendication 17, **caractérisé en ce que** la turbine (14) est positionnée de façon à ce que son axe (14A) soit parallèle à l'axe (4A) d'un rouleau de formage (4), et **en ce que** la turbine (14) et le rouleau de formage (4) se sont positionnés dans une relation telle que la plus petite distance (Z) entre la périphérie (14B) de la turbine et la périphérie (4B) du rouleau de formage est comprise entre 5 et 700 mm, de préférence entre 5 et 200 mm.

33. Dispositif selon la revendication 16, **caractérisé en ce que** l'arbre (14A) du composant mobile (14) est relié à un générateur électrique (11).
